# EUROPEAN PATENT SPECIFICATION

(11) **EP 3 968 752 B1**
(45) Date of publication and mention of the grant of the patent: **04.09.2024**
(21) Application number: 20736966.1
(22) Date of filing: 01.07.2020
(51) Int. Cl.: A01F 15/08, A01F 15/18

(54) **VARIABLE CHAMBER ROUND BALER**
RUNDBALLENPRESSE MIT VARIABLEM PRESSRAUM
PRESSE À BALLES RONDES A CHAMBRE VARIABLE

(30) Priority: 02.07.2019 GB 201909540
(43) Date of publication of application: 23.03.2022
(73) Proprietor: Kuhn-Geldrop B.V., 5667 KP Geldrop (NL)
(72) Inventor: DE BRUIJN, Gijs, Petrus, Wilhelmina, 6086CH Neer (NL); TENBULT, Henricus, Theodorus, Hubertus, 5531KL Bladel (NL)
(74) Representative: Murgitroyd & Company
(86) International application number: PCT/EP2020/068587
(87) International publication number: WO 2021/001456

(56) References cited:
- EP-A1- 1 634 491
- EP-A1- 3 106 020
- GB-A- 2 044 170
- US-A- 4 517 795

## Description

The present invention relates to a variable chamber baler for baling agricultural crop material, and to a method of baling. The baler may for example be similar in certain respects to that described in EP3021659B1.

Balers for making cylindrical (or "round") bales of agricultural crop material are well known and include types known as fixed chamber balers, which include a set of compression rollers that define a bale forming zone of fixed size, and variable chamber balers, in which a bale forming zone is defined by one or more flexible elongate compression elements, for example belts. In variable chamber balers the bale forming zone defined by the flexible elongate compression elements increases in size as the bale is formed within the bale chamber. For the sake of simplicity in the present document each flexible elongate compression element will be referred to as a "belt".

The present invention relates to a variable chamber baler.

Typically, a variable chamber baler includes a pick up mechanism that gathers cut agricultural crop material ("bale material") from the ground and feeds the material into the bale chamber. The bale chamber typically includes a set of belts that are arranged side by side and trained around a set of rolls. Bale material is fed into a bale forming zone and the belts are driven to form a cylindrical bale by rotating and compressing the bale material. As more crop material is fed into the bale chamber the bale grows and the bale forming zone defined by the belts increases in size to accommodate the expanding bale. When the bale has reached the desired size, feeding is stopped and the bale is bound by feeding a binding material (for example netting, film or twine) into the bale chamber and wrapping it around the circumference of the bale. After binding, a tailgate in the rear of the baler opens and the finished bale is ejected from the bale chamber.

It is known from US4517795 to provide a variable chamber belt baler with spring-loaded feelers that are pressed against the belts on the right and the left hand side of the bale chamber, so as to indicate to the driver the shape of the bale in the bale chamber.

In the prior art the belt tension is measured by pressing a roller sensor into a straight part of the belt, and the distance that the belt is pressed inward is sensed and used as a measure of the tension in the belt.

The comparison between the distances pressed inward of the belts on the left and right hand sides of the bale chamber indicates the difference of the belt tension and any differences in the filling of the bale chamber with bale material.

A disadvantage of this system is that the belt will be deformed by the pressure of the roller sensor and because of this deformation the straight running the belts can be influenced; the belt will run more to the right or left over the successive rollers which could lead to wear (e.g. if the belts run onto the side walls of the bale chamber) and pollution of the bale material as the gaps between two successive belts will increase.

In another known baler, one of the idler rollers is mounted on a spring suspension system, which allows the roller to move in response to the tension in the belts. Sensors are provided for measuring movement at both ends of the roller and the signals from these sensors are used to determine a difference in belt tension across the width of the bale chamber. This system also suffers from the disadvantage that movement of the suspended roller affects straight running of the belts, leading to belt wear and pollution of the crop material.

EP 3106020 A1 describes a round baler having a bale compression chamber, a roller that interacts directly or indirectly with a bale, and a sensor for detecting the size of the bale.

It is an object of the present invention to provide a variable chamber baler and a method of baling that overcomes or mitigates one or more of the aforesaid disadvantages.

According to one aspect of the present invention there is provided a variable chamber baler as defined by the claims.

In an embodiment the variable chamber baler comprises:
- a bale chamber having a width defined by first and second side walls;
- at least one belt that defines a bale forming zone within the bale chamber, wherein bale material is rotated and compressed by the belt within the bale forming zone to form a bale;
- at least one roller over which the belt runs, said at least one roller comprising a sensing roller having first and second ends supported by respective first and second support elements;
- first and second strain gauges mounted respectively on the first and second support elements and configured to sense strain in the first and second support elements; and
- a control device connected to receive strain signals from the first and second strain gauges;
- wherein the control device is configured to determine from the received strain signals a difference in belt tension across the width of the bale chamber.

The baler is able to sense a difference in belt tension across the width of the bale chamber, caused for example by uneven filling of the bale chamber with bale material. This allows an operator to adjust operation of the baler to ensure even filling of the bale chamber. Alternatively, operation of the baler may be controlled automatically to ensure even filling of the bale chamber. This ensures that the bale has an even cylindrical shape. Because the belt tension is sensed using strain gauges the run of the belt is not affected, thus avoiding issues with wear of the belts and pollution of the bale material.

Optionally, the first and second support elements comprise rigid support elements. This prevents significant movement of the sensing roller at least at the ends thereof in response to changes in the tension in the belts. Preferably, the support elements are sufficiently rigid to ensure that any radial movement of the axis of the sensing roller in response to changes in the tension in the belts is less than 500µm, preferably less than 200µm, and more preferably less than 100µm.

Optionally, the first and second support elements are connected to the first and second side walls or a frame or of the baler. Alternatively, the support elements may be connected to any other rigid part of the baler.

Optionally, the first and second ends of the sensing roller are connected to the first and second support elements through rotary bearings, allowing rotation of the sensing roller.

Optionally, the belt is deflected as it runs around the sensing roller through a deflection angle θ where θ≥45°, or θ≥90°, or θ≥ 120°, or θ≥ 135°. This ensures that a large radial resultant force is transferred to the sensing roller from the belt.

Optionally, the sensing roller comprises an idler roller. This ensures that vibrations and/or drive forces from a drive mechanism do not interfere with the strain signals from the strain sensors. Alternatively, however, the sensing roller may comprise a driven roller.

Optionally, the sensing roller is located in an upper part of the bale chamber. For example, it may be one of the rollers that are located in the upper part of the bale chamber.

Optionally, the sensing roller is the uppermost of a plurality of rollers around which the belt runs.

Optionally, the baler includes a pair of movable rollers located adjacent the bale forming zone that can move in response to changes in the size of the bale in the bale forming zone, and a fixed intermediate roller located away from the bale forming zone that guides the belt as it runs between the movable rollers, wherein the intermediate roller comprises the sensing roller. This arrangement makes it possible to sense an absolute belt tension value that depends at least partially on the belt tension required to rotate and form the bale in addition to a difference in belt tension across the width of the bale chamber.

Optionally, the baler includes a plurality of belts that define a bale forming zone within the bale chamber, wherein the belts are arranged side-by-side across the width of the bale chamber. Alternatively, the baler may include a single belt that extends across the width of the bale chamber.

Optionally, the plurality of belts include a first belt located adjacent the first side wall of the bale chamber and a second belt located adjacent the second side wall of the bale chamber, wherein the control device is configured to determine from the received strain signals a difference in belt tension of the first and second belts. Alternatively, if the baler includes a single belt, the control device may be configured to determine from the received strain signals a difference in belt tension at the edges of the belt.

Optionally, the control device is connected to a display device and is configured to provide via the display device an operational indication that is based on the determined difference in belt tension across the width of the bale chamber. The operational indication may indicate, for example, the amount of bale material in different parts of the bale, or it may indicate the corrective action that the operator needs to take to correct uneven filling of the bale chamber, for example steering to the left or to the right relative to a swath of bale material on the ground. This allows an operator to take appropriative corrective action if a significant difference in belt tension is detected.

Optionally, the control device is configured to control operation of the baler so as to reduce the determined difference in belt tension across the width of the bale chamber. This enables the baler to take appropriative corrective action automatically if a significant difference in belt tension is detected.

Optionally, the control device is configured to reduce the determined difference in belt tension across the width of the bale chamber by controlling one or more of the following baler functions:
- the path of the baler relative to a swath of bale material on the ground;
- feeding of bale material into the bale chamber by a feed device

These baler function may involve, for example, diverting the bale material towards the side of the bale chamber where the belt tension is lower.

The baler further comprises a belt tensioner that is configured to adjust the belt tension, wherein the control device is configured to control operation of the belt tensioner. This allows the control device to conduct certain operations of the belt tensioner automatically.

The control device is configured to control operation of the belt tensioner so as to reduce the belt tension if the determined difference in belt tension across the width of the bale chamber exceeds a predetermined limit, and/or if a sum of the received strain signals exceeds a predetermined limit.

If an excessive difference in belt tension is detected the belt tensioner may be controlled automatically to reduce the belt tension.

If an excessive belt tension is detected the belt tensioner may be controlled automatically to reduce the belt tension, for example to avoid excessive power consumption when baling crop material with a high moisture content.

Optionally, the control device includes an operator interface that enables an operator to select one or more operating parameters of the control device, wherein said operating parameters include one or more of:
- a desired belt tension;
- a maximum value of the belt tension;
- a relationship between the power consumption of the baler and the belt tension;
- a maximum permissible difference in belt tension across the width of the bale chamber.

According to another aspect of the invention there is provided a method of forming a bale in a variable chamber baler as defined by the claims.

In an embodiment the variable chamber baler comprises a bale chamber having a width defined by first and second side walls, at least one belt that defines a bale forming zone within the bale chamber, at least one roller over which the belt runs, said at least one roller comprising a sensing roller having first and second ends supported by respective first and second support elements; first and second strain gauges mounted respectively on the first and second support elements and configured to sense strain in the first and second support elements, and a control device that is connected to receive strain signals from the first and second strain gauges, the method comprising:
- rotating and compressing bale material within the bale forming zone to form a bale; and
- sensing strain in the first and second support elements;
- wherein the control device determines from the received strain signals a difference in belt tension across the width of the bale chamber.

Optionally, the method further comprises displaying via the display device the determined difference in belt tension across the width of the bale chamber.

Optionally, the method further comprises controlling operation of the baler so as to reduce the determined difference in belt tension across the width of the bale chamber.

Optionally, the method further comprises reducing the determined difference in belt tension across the width of the bale chamber by controlling one or more of the following baler functions:
- the path of the baler relative to a swath of bale material on the ground;
- feeding of bale material into the bale chamber by a feed device.

The control device determines from the received strain signals a difference in belt tension across the width of the bale chamber, and the control device controls operation of the belt tensioner so as to reduce the belt tension if: the determined difference in belt tension across the width of the bale chamber exceeds a predetermined limit, and/or a sum of the received strain signals exceeds a predetermined limit

Optionally, the method further comprises sensing the belt tension a first belt located adjacent the first side wall and a second belt located adjacent the second side wall of the bale chamber, and determining a difference in belt tension of the first and second belts.

Embodiments of the invention will now be described by way of example with reference to the accompanying drawings, wherein:
Figure 1 is an isometric view of a variable chamber round baler;
Figure 2 is a sectional side view of a variable chamber round baler;
Figure 2a is a sectional side view showing part of the baler at an enlarged scale;
Figure 3 is a view from the right hand side of the baler, and
Figure 4 is a view from the left hand side with a side cover plate removed to show some internal components of the baler.

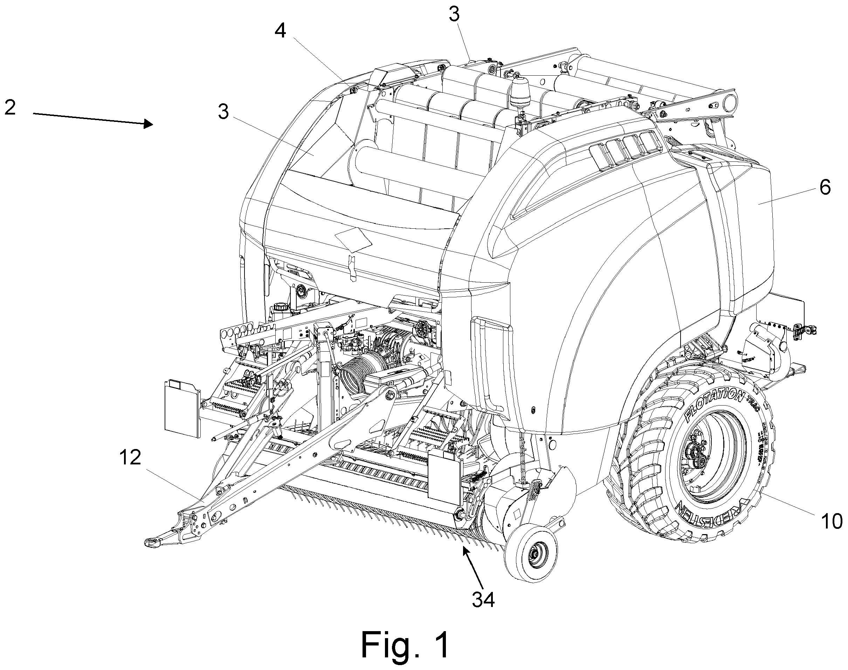

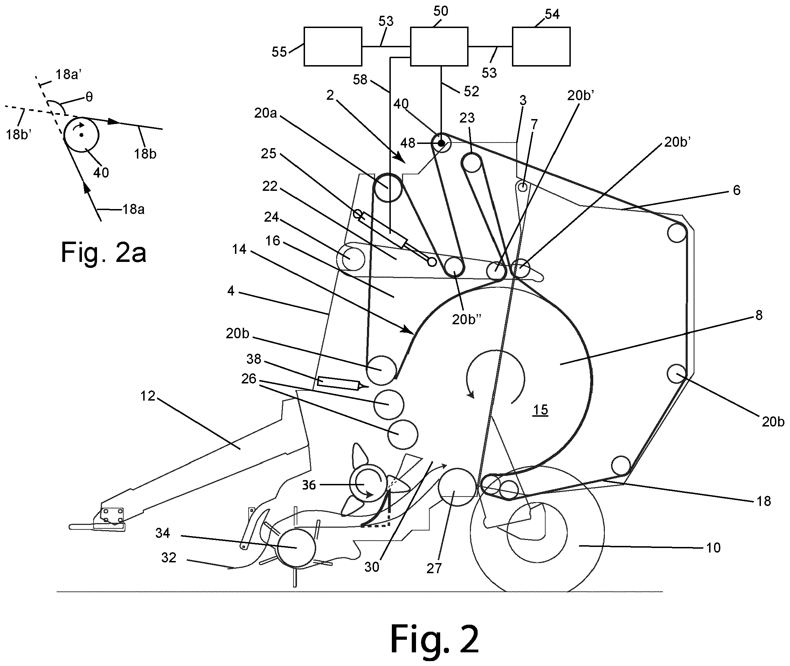

Figures 1 & 2 show the main components of two agricultural variable chamber round balers 2 that embody the invention. Although there are few minor differences between the balers, these differences do not affect the following description of the invention.

The baler 2 includes a frame 3 and a housing 4 having a tailgate 6 that can pivot open about a pivot 7 in the upper part of the housing 4 to release a bale 8. The baler 2 is mounted on wheels 10 and has a drawbar 12 allowing it to be drawn by an agricultural vehicle such as a tractor (not shown). The baler 2 is configured to be driven from the power take off unit (not shown) of the tractor.

The baler 2 includes a bale chamber 14 within which a round (cylindrical) bale 8 of bale material, for example crop material, can be formed. A bale forming zone 15 is provided within the bale chamber 14, the shape of the bale forming zone 15 being defined the side walls 16 of the housing 4 and by one or more endless belts 18 that pass around a set of rollers 20a, 20b. The bale chamber 14 has a width W defined by the separation of the side walls 16. In the embodiment shown in the drawings the baler 2 includes a plurality of belts 18 that are arranged side-by-side across the width W of the bale chamber 14.

At least one of the rollers is a drive roller 20a that is driven via the power take-off unit and drives the belts 18 causing them to rotate around the rollers 20a, 20b. The other rollers are undriven idler rollers 20b that rotate with the belts 18.

Two of the idler rollers comprise a pair movable rollers 20b', which are mounted on a tensioning arm 22. The movable rollers 20b' are located adjacent the bale forming zone 15 and can move to accommodate a change in the size of the bale 8 in the bale forming zone 15. An intermediate roller 23 is located in the belt run between the movable rollers 20b'. The intermediate roller 23 is mounted in a fixed position relative to the frame 3 at a location away from the bale forming zone 15. The intermediate roller 23 guides the belt 18 as it runs from the rear part of the bale chamber 14, around the movable rollers 20b' and the intermediate roller 23, and back to the front part of the bale chamber 14.

A third idler roller 20b" is mounted on the tensioning arm 22 to take up any slack in the belts 18 as the arm 22 moves. The tensioning arm 22 can be pivoted about a pivot point 24 to accommodate an increase or decrease the size of the bale forming zone 15 defined by the belts 18 within the bale chamber 14. For example, the arm 22 pivots upwards when the bale forming zone 15 increases in size, and the arm 22 pivots downwards when the bale forming zone 15 decreases in size. During a bale forming operation the tensioning arm 22 starts in a low position to provide a small bale forming zone 15 and pivots upwards as the bale grows to accommodate the increasing the size of the bale 8.

A belt tensioner 25, for example a hydraulic or electric actuator, is connected between the tensioning arm 22 and the frame 3 and is operable to adjust the pressure on the tensioning arm 22 and the tension in the belts 18. The belt tensioner 25 can be controlled to adjust the degree of compression of the bale material and the density of the bale 8.

Optionally, the bale chamber 14 may be defined in part by one or more press rollers 26 and a starter roller 27, which do not engage the belts 18. The press rollers 26 and the starter roller 27 are located on opposite sides of a feed opening 30 through which bale material 32 is fed into the bale chamber 14. The press rollers 26 and the starter roller 27 are normally driven rollers.

The baler also includes a pick-up mechanism 34 for picking up bale material from the ground and feeding it into the bale chamber 14 along a feed path 32. Optionally, a rotating cutter 36 may be provided to chop the bale material as it passes along the feed path 32. Optionally, a diverter mechanism (not shown) may be provided for diverting the bale material towards the left or right side of the bale chamber 14.

The bale material is circulated within the bale chamber 14 and compressed by the rotating belts 18 and the rollers 20a, 20b, 26, 27 thereby forming a round bale 8. When the bale 8 has been formed and has reached a desired diameter it is bound with a suitable binding material, typically twine, net or film, which may be fed into the bale chamber 14 from a binding device 38 between the lowermost idler roller 20b in the front part of the bale chamber 14 and the upper press roller 26. The binding material is wrapped around the bale 8 and the bound bale is then ejected from the bale chamber 14 by opening the tailgate 6.

All the aforesaid features are conventional and may for example be as described in EP3021659B1. These features will not therefore be described in further detail.

The set of rollers 20a, 20b includes at least one roller (a "sensing roller") 40 that is used for sensing the tension in the belts 18. The sensing roller 40 is preferably an idler roller 20b, but it may alternatively be a driven roller 20a. Preferably the sensing roller 40 is one of the rollers 20a, 20b that is essential for the guiding the belt 18 according to the design of the baler, to avoid increasing the total number of rollers in the bale chamber 14.

The sensing roller 40 is preferably located in an upper part of the baler for easy access. In the example shown in the drawings the sensing roller 40 is the uppermost of the idler rollers 20b. However, the sensing roller 40 may alternatively be another one of the rollers 20a, 20b. For example, in an alternative embodiment that is described below, the intermediate roller 23 comprises the sensing roller 40.

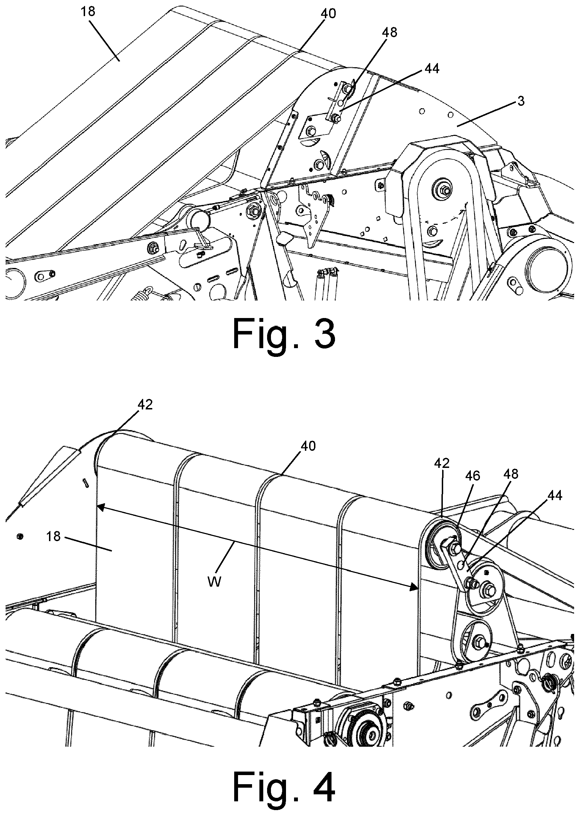

As shown in more detail in Figs. 3 & 4, the sensing roller 40 has first and second ends 42, which are supported by respective first and second support elements 44. In this embodiment each support element 44 comprises a steel bar, wherein a first end of the bar is attached via a rotary bearing 46 to the roller 40 and a second end of the bar 44 is attached to the frame 3 of the baler. Alternatively, the second end of the bar 44 may be attached to a side plate 16 or another rigid component of the baler. The support elements 44 may also take other forms.

Preferably, the support elements 44 are rigid and are configured to prevent significant movement of the sensing roller 40 (apart from rotary movement of the sensing roller 40) in response to changes in the tension in the belts 18. In practice, the support elements 44 will deform slightly in response to the tension in the belts 18, but the resulting radial movement of the axis of the sensing roller 40 will not be significant: that is, it will not affect running of the belts 18 or operation of the baler. In practice, the support elements 44 are sufficiently rigid to ensure that any radial movement of the axis of the sensing roller 40 in response to changes in the tension in the belts 18 is less than 500µm, preferably less than 200µm, and more preferably less than 100µm.

First and second strain gauges 48 are mounted respectively on the first and second support elements 44 and are configured to sense strain in the first and second support elements 44. The strain gauges 48 may for example be electrical resistance strain gauges. Alternatively, other types of force sensor or strain sensor may be used. Preferably the strain gauges are positioned to sense a pressure force, so as to save space.

The sensing roller 40 is preferably selected to be a roller that deflects the run of the belt 18 through a relatively large angle, to increase the resultant radial force on the sensing roller 40. In the example illustrated in Figs. 2 and 2a, a first belt portion 18a runs towards the sensing roller 40 and a second belt portion 18b runs away from the sensing pulley 40. A deflection angle θ is defined between the running direction of the first belt portion 18a (as represented in Fig. 2a by the dashed line 18a') and the running direction of the second belt portion 18b (as represented by the dashed line 18b'). In this example the belt is deflected around the sensing roller 40 through a deflection angle θ of approximately 135°. More generally, the deflection angle θ is preferably defined by one of the ranges θ≥45°, or preferably θ≥90°, or more preferably θ≥120°, or more preferably θ≥135°.

As shown in Fig. 2, a control device 50 is connected to receive strain signals from the first and second strain gauges 48 via a signal line 52. Alternatively, the strain signals may be transmitted to the control device 50 wirelessly. The control device 50 is configured to determine from the received strain signals a difference in belt tension across the width W of the bale chamber. The control device 50 may optionally be connected via one or more signal lines 53 or wirelessly to a display device 54, and/or optionally to an operator interface 55 that allows an operator to control operation of the baler via the control device 50. The control device 50, and/or the display device 54, and/or the operator interface 55 may optionally be located in the cab of a tractor or agricultural vehicle used to tow the baler 2.

Any difference in the belt tension on the right and left hand sides of the bale chamber 14 is measured by sensing the force exerted on the sensing roller 40 by the belts 18, through the support elements 44 on the left and right sides of the baler 2. The rigid support elements 44 are connected between the sensing roller 40 and the frame of the baler, so that there is no significant displacement of the sensing roller 40, which could influence the running of the belts 18.

If the baler 2 uses a single belt 18 that extends across the full width W of the bale chamber 14 the control device 50 will sense a difference in the belt tension between the left and right edges of the belt 18. Alternatively, if the baler 2 employs a plurality of belts that are spaced apart across the width W of the bale chamber 14 the control device 50 will sense a difference in the belt tension between the left- and right-hand belts.

The difference in belt tension may be displayed via the display device 54 to an operator of the baler, who can make adjustments to ensure even filling of the bale chamber 14. For example, if the display shows that the belt tension is higher on the left side of the bale chamber, the operator can adjust the path of the baler relative a swath of bale material on the ground so that more bale material is fed into the right side of the bale chamber. This can be done either by steering the tractor to the left or by adjusting the position of the baler relative to the tractor using an adjustable drawbar or by steering the baler.

Alternatively, if the baler has a diverter device within the feed device, this can be adjusted to divert more bale material towards the right side of the bale chamber.

The operations described above may also be controlled automatically. In a fully robotic baler that does not require an operator, the display device 54 may be omitted.

The operations described above will generally ensure that the bale chamber is filled evenly with bale material, producing good, evenly-shaped cylindrical bales. However, if for any reason the operator fails to respond to a display showing a difference in belt tension across the bale chamber, or if the operator responds incorrectly to exacerbate the problem, the baler can be configured to intervene automatically if the difference in belt tension exceeds a predetermined value to prevent possible damage to the belts 18. For example, the control device 50 may optionally be connected via a control line 58 or wirelessly to the belt tensioner 25, and may be configured to send a control signal to the belt tensioner 25 if the difference in belt tension exceeds a predetermined value, causing the belt tensioner 25 to retract the tensioning arm 22, thereby reducing the tension in the belts 18.

In the embodiment shown in Fig. 2 the sensing roller 40 is the uppermost of the idler rollers 20b. However, as previously mentioned, the sensing roller 40 may alternatively be another one of the rollers 20a, 20b. For example, the intermediate roller 23 may be used as the sensing roller 40. Selecting the intermediate roller 23 as the sensing roller 40 potentially provides two advantages. First, the deflection angle θ is very large: in this example θ>180°, which means that the resulting radial force on the sensing roller 40 is also large. Second, because the intermediate roller 23 is located in the belt run between the two tensioning rollers 20b' it is able to sense an absolute belt tension value, which takes account of the belt tension generated by belt tensioner 25 and the tension created by friction as the bale 8 rotates within the bale chamber 14. This allows the control device 50 to provide additional control functions. For example, if the control device 50 senses that the absolute tension in any part of the belt exceeds a predetermined limit it can automatically reduce the force applied by the belt tensioner 25 to reduce the belt tension and prevent damage to the belts. Similarly, when baling crop material with a high moisture content, for example sileage, which can cause high friction between the bale and the side walls of the bale chamber, the control device can reduce the belt tension to avoid excessive power consumption.

## Claims

1. A variable chamber baler comprising:
• a bale chamber (14) having a width defined by first and second side walls (16);
• at least one belt (18) that defines a bale forming zone within the bale chamber, wherein bale material is rotated and compressed by the belt within the bale forming zone to form a bale;
• at least one roller (40) over which the belt runs, said at least one roller comprising a sensing roller having first and second ends supported by respective first and second support elements (44);
• a belt tensioner (25) that is configured to adjust the belt tension;
• first and second strain gauges (48) mounted respectively on the first and second support elements and configured to sense strain in the first and second support elements; and
• a control device (50) connected to receive strain signals from the first and second strain gauges;
**characterised in that**
the control device (50) is configured to determine from the received strain signals a difference in belt tension across the width of the bale chamber
and
the control device is configured to control operation of the belt tensioner (25) so as to reduce the belt tension if:
i. the determined difference in belt tension across the width of the bale chamber exceeds a predetermined limit, and/or
ii. a sum of the received strain signals exceeds a predetermined limit.

2. A variable chamber baler according to claim 1, wherein the first and second support elements (44) comprise rigid support elements,
and/or wherein the first and second support elements are connected to the first and second side walls (16) or a frame of the baler.

3. A variable chamber baler according to any one of the preceding claims, wherein the first and second ends of the sensing roller (40) are connected to the first and second support elements through rotary bearings.

4. A variable chamber baler according to any one of the preceding claims, wherein the belt (18) is deflected as it runs around the sensing roller (40) through a deflection angle θ where θ≥45°, or θ≥90°, or θ≥120°, or θ≥135°.

5. A variable chamber baler according to any one of the preceding claims, wherein the sensing roller (40) comprises an idler roller,
and/or wherein the sensing roller (40) is located in an upper part of the bale chamber (14),
and/or wherein the sensing roller (40) is the uppermost of a plurality of rollers around which the belt (18) runs.

6. A variable chamber baler according to any one of the preceding claims, wherein the baler includes a pair of movable rollers (20b') located adjacent the bale forming zone that can move in response to changes in the size of the bale in the bale forming zone, and a fixed intermediate roller (23) located away from the bale forming zone that guides the belt as it runs between the movable rollers, wherein the intermediate roller comprises the sensing roller.

7. A variable chamber baler according to any one of the preceding claims, including a plurality of belts (18) that define a bale forming zone within the bale chamber, wherein the belts are arranged side-by-side across the width of the bale chamber, and optionally wherein the plurality of belts include a first belt located adjacent the first side wall of the bale chamber and a second belt located adjacent the second side wall of the bale chamber, and wherein the control device (50) is configured to determine from the received strain signals a difference in belt tension of the first and second belts.

8. A variable chamber baler according to any one of the preceding claims, wherein the control device (50) is connected to a display device (54) and is configured to provide via the display device an indication that is based on the determined difference in belt tension across the width of the bale chamber.

9. A variable chamber baler according to any one of the preceding claims, wherein the control device (50) is configured to control operation of the baler so as to reduce the determined difference in belt tension across the width of the bale chamber, and optionally wherein the control device is configured to reduce the determined difference in belt tension across the width of the bale chamber by controlling one or more of the following baler functions:
• the path of the baler relative to a swath of bale material on the ground;
• feeding of bale material into the bale chamber by a feed device.

10. A variable chamber baler according to any preceding claim, wherein the control device (50) includes an operator interface (55) that enables an operator to select one or more operating parameters of the control device, wherein said operating parameters include one or more of:
• a desired belt tension;
• a maximum value of the belt tension;
• a relationship between the power consumption of the baler and the belt tension;
• a maximum permissible difference in belt tension across the width of the bale chamber.

11. A method of forming a bale in a variable chamber baler that comprises a bale chamber (14) having a width defined by first and second side walls (16), at least one belt (18) that defines a bale forming zone within the bale chamber, at least one roller (40) over which the belt runs, said at least one roller comprising a sensing roller having first and second ends supported by respective first and second support elements; a belt tensioner (25) that is configured to adjust the belt tension; first and second strain gauges (48) mounted respectively on the first and second support elements and configured to sense strain in the first and second support elements, and a control device (50) that is connected to receive strain signals from the first and second strain gauges, whereby the control device (50) is configured to control operation of the belt tensioner;
the method comprising:
• rotating and compressing bale material within the bale forming zone to form a bale; and
• sensing strain in the first and second support elements;
• determining by the control device (50) from the received strain signals a difference in belt tension across the width of the bale chamber, and
• controlling with the control device (50) the operation of the belt tensioner so as to reduce the belt tension if:
∘ the determined difference in belt tension across the width of the bale chamber exceeds a predetermined limit, and/or
∘ a sum of the received strain signals exceeds a predetermined limit.

12. A method according to claim 11, further comprising displaying via a display device (52) the determined difference in belt tension across the width of the bale chamber.

13. A method according to any one of claims 11-12, further comprising controlling operation of the baler so as to reduce the determined difference in belt tension across the width of the bale chamber,
and optionally further comprising reducing the determined difference in belt tension across the width of the bale chamber by controlling one or more of the following baler functions:
• the path of the baler relative to a swath of bale material on the ground;
• feeding of bale material into the bale chamber by a feed device.

## Patentansprüche

1. Eine Rundballenpresse, die Folgendes beinhaltet:
• eine Ballenkammer (14) mit einer Breite, die durch erste und zweite Seitenwände (16) definiert ist;
• mindestens ein Band (18), das eine Ballenbildungszone innerhalb der Ballenkammer definiert, wobei das Ballenmaterial gedreht wird und durch das Band innerhalb der Ballenbildungszone komprimiert wird, um einen Ballen zu bilden;
• mindestens eine Walze (40), über den das Band läuft, wobei die mindestens eine Walze eine Tastwalze beinhaltet, der ein erstes und ein zweites Ende aufweist, die durch ein entsprechendes erstes bzw. zweites Stützelement (44) gestützt werden;
• einen Bandspanner (25), der konfiguriert ist, um die Bandspannung einzustellen;
• erste and zweite Dehnungsmessgeräte (48), die entsprechend auf dem ersten und zweiten Stützelement befestigt sind und konfiguriert sind, um Dehnung in dem ersten und zweiten Stützelement zu ertasten; und
• eine Steuervorrichtung (50), die verbunden ist, um Dehnungssignale von dem ersten und zweiten Dehnungsmessgerät zu empfangen;
**dadurch gekennzeichnet, dass**
die Steuervorrichtung (50) konfiguriert ist, um von den empfangenen Dehnungssignalen eine Differenz in der Bandspannung über die Breite der Ballenkammer hinweg zu bestimmen
und
die Steuervorrichtung konfiguriert ist, um den Betrieb des Bandspanners (25) so zu steuern, um die Bandspannung zu reduzieren, wenn:
i. die bestimmte Differenz in der Bandspannung über die Breite der Ballenkammer hinweg ein vorbestimmtes Limit übersteigt und/oder
ii. eine Summe der empfangenen Dehnungssignale ein vorbestimmtes Limit übersteigt.

2. Rundballenpresse gemäß Anspruch 1, wobei das erste und zweite Stützelement (44) steife Stützelemente beinhalten
und/oder wobei das erste und zweite Stützelement mit der ersten und zweiten Seitenwand (16) oder einem Rahmen des Ballens verbunden sind.

3. Rundballenpresse gemäß einem der vorhergehenden Ansprüche, wobei das erste und zweite Ende der Tastwalze (40) durch Drehlager mit dem ersten und zweiten Stützelement verbunden sind.

4. Rundballenpresse gemäß einem der vorhergehenden Ansprüche, wobei das Band (18) abgelenkt ist, während es um die Tastwalze (40) durch einen Ablenkungswinkel θ läuft, wobei θ ≥ 45° oder θ ≥ 90° oder θ ≥ 120° oder θ ≥ 135°.

5. Rundballenpresse gemäß einem der vorhergehenden Ansprüche, wobei die Tastwalze (40) eine Laufrolle beinhaltet,
und/oder wobei die Tastwalze (40) in einem oberen Teil der Ballenkammer (14) lokalisiert ist,
und/oder wobei die Tastwalze (40) der oberste einer Vielzahl von Walzen ist, um den das Band (18) läuft.

6. Rundballenpresse gemäß einem der vorhergehenden Ansprüche, wobei der Ballen ein Paar bewegliche Walzen (20b') umfasst, das neben der Ballenbildungszone lokalisiert ist, das sich als Reaktion auf Änderungen in der Größe des Ballens in der Ballenbildunszone bewegen kann, und eine feste Zwischenwalze (23), die weg von der Ballenbildungszone lokalisiert ist, der das Band führt, während es zwischen den beweglichen Walzen läuft, wobei die Zwischenwalze die Tastwalze beinhaltet.

7. Rundballenpresse gemäß einem der vorhergehenden Ansprüche, die eine Vielzahl von Bändern (18) umfasst, die eine Ballenbildungszone innerhalb der Ballenkammer definieren, wobei die Bänder Seite an Seite über die Breite der Ballenkammer hinweg eingerichtet sind, wobei optional die Vielzahl von Bändern ein erstes Band umfasst, das neben der ersten Seitenwand der Ballenkammer lokalisiert ist, und ein zweites Band, das neben der zweiten Seitenwand der Ballenkammer lokalisiert ist, und wobei die Steuervorrichtung (50) konfiguriert ist, um von den empfangenen Dehnungssignalen eine Differenz in der Bandspannung des ersten und zweiten Bands zu bestimmen.

8. Rundballenpresse gemäß einem der vorhergehenden Ansprüche, wobei die Steuervorrichtung (50) mit einer Anzeigevorrichtung (54) verbunden ist und konfiguriert ist, um über die Anzeigevorrichtung eine Indikation bereitzustellen, die auf der bestimmten Differenz in der Bandspannung über die Breite der Ballenkammer hinweg basiert.

9. Rundballenpresse gemäß einem der vorhergehenden Ansprüche, wobei die Steuervorrichtung (50) konfiguriert ist, um den Betrieb der Ballenpresse zu steuern, um die bestimmte Differenz in der Bandspannung über die Breite der Ballenkammer hinweg zu reduzieren, und wobei optional die Steuervorrichtung konnfiguriert ist, um die bestimmte Differenz in der Bandspannung über die Breite der Ballenkammer hinweg durch das Steuern einer oder mehrerer der folgenden Ballenpressenfunktionen zu steuern:
• des Pfades der Ballenpresse relativ zu einem Streifen von Ballenmaterial auf dem Boden;
• des Zuführens des Ballenmaterials in die Ballenkammer durch eine Zuführvorrichtung.

10. Rundballenpresse gemäß einem der vorhergehenden Ansprüche, wobei die Steuervorrichtung (50) eine Operatorschnittstelle (55) umfasst, die einem Operator ermöglicht, einen oder mehrere Betriebsparameter der Steuervorrichtung auszuwählen, wobei die Betriebsparameter eines oder mehrere der Folgenden umfassen:
• eine gewünschte Bandspannung;
• einen maximalen Wert der Bandspannung;
• eine Beziehung zwischen dem Leistungsverbrauch der Ballenpresse und der Bandspannung;
• eine maximale zulässige Differenz in der Bandspannung über die Breite der Ballenkammer hinweg.

11. Ein Verfahren des Bildens eines Ballens in einer Rundballenpresse, die Folgendes beinhaltet: eine Ballenkammer (14) mit einer Breite, die durch erste und zweite Seitenwände (16) definiert ist, mindestens ein Band (18), das eine Ballenbildungszone innerhalb der Ballenkammer definiert, mindestens eine Walze (40), über die das Band läuft, wobei die mindestens eine Walze eine Tastwalze beinhaltet, die erste und zweite Enden aufweist, die durch entsprechende erste und zweite Stützelemente gestützt werden; einen Bandspanner (25), der konfiguriert ist, um die Bandspannung einzustellen; erste und zweite Dehnungsmessgeräte (48), die entsprechend auf dem ersten und zweiten Stützelement befestigt sind und konfiguriert sind, um Dehnung in dem ersten und zweiten Stützelement zu ertasten, und eine Steuervorrichtung (50), die verbunden ist, um Dehnungssignale von dem ersten und zweiten Dehnungsmessgerät zu empfangen, wobei die Steuervorrichtung (50) konfiguriert ist, um den Betrieb des Bandspanners zu steuern;
wobei das Verfahren Folgendes beinhaltet:
• Drehen und Komprimieren von Ballenmaterial innerhalb der Ballenbildungszone, um einen Ballen zu bilden; und
• Ertasten von Dehnung in dem ersten und zweiten Stützelement;
• Bestimmen durch die Steuervorrichtung (50) aus den empfangenen Dehnungssignalen einer Differenz in der Bandspannung über die Breite der Ballenkammer hinweg, und
• Steuern, mit der Steuervorrichtung (50), des Betriebs des Bandspanners, um die Bandspannung zu reduzieren, wenn:
∘ die bestimmte Differenz in der Bandspannung über die Breite der Ballenkammer hinweg ein vorbestimmtes Limit übersteigt, und/oder
∘ eine Summe der empfangenen Dehnungssignale ein vorbestimmtes Limit übersteigt.

12. Verfahren gemäß Anspruch 11, das ferner das Anzeigen über eine Anzeigevorrichtung (52) der bestimmten Differenz in der Bandspannung über die Breite der Ballenkammer hinweg beinhaltet.

13. Verfahren gemäß einem der Ansprüche 11-12, das ferner das Steuern des Betriebs der Ballenpresse beinhaltet, um die bestimmte Differenz in der Bandspannung über die Breite der Ballenkammer hinweg zu reduzieren,
und das optional ferner das Reduzieren der bestimmten Differenz in der Bandspannung über die Breite der Ballenkammer durch das Steuern einer oder mehrerer der folgenden Ballenphasenfunktionen beinhaltet:
• des Pfades der Ballenpresse relativ zu einem Streifen von Ballenmaterial auf dem Boden;
• des Zuführens des Ballenmaterials in die Ballenkammer durch eine Zuführvorrichtung.

## Revendications

1. Une presse à balles à chambre variable comprenant :
• une chambre à balle (14) ayant une largeur définie par des première et deuxième parois latérales (16) ;
• au moins une courroie (18) qui définit une zone de formation de balle au sein de la chambre à balle, du matériau de balle étant amenée à tourner et étant comprimé par la courroie au sein de la zone de formation de balle pour former une balle ;
• au moins un rouleau (40) sur lequel la courroie défile, ledit au moins un rouleau comprenant un rouleau de détection ayant des première et deuxième extrémités soutenues par des premier et deuxième élément de soutien (44) respectifs ;
• un tendeur de courroie (25) qui est configuré pour régler la tension de courroie ;
• des première et deuxième jauges de contrainte (48) montées respectivement sur les premier et deuxième éléments de soutien et configurées pour détecter une contrainte dans les premier et deuxième éléments de soutien ; et
• un dispositif de commande (50) raccordé pour recevoir des signaux de contrainte en provenance des première et deuxième jauges de contrainte ;
**caractérisée en ce que**
le dispositif de commande (50) est configuré pour déterminer, à partir des signaux de contrainte reçus, une différence dans la tension de courroie sur la largeur de la chambre à balle et le dispositif de commande est configuré pour commander le fonctionnement du tendeur de courroie (25) de sorte à réduire la tension de courroie si :
i. la différence déterminée dans la tension de courroie sur la largeur de la chambre à balle dépasse une limite prédéterminée, et/ou
ii. une somme des signaux de contrainte reçus dépasse une limite prédéterminée.

2. Une presse à balles à chambre variable selon la revendication 1, dans laquelle les premier et deuxième éléments de soutien (44) comprennent des éléments de soutien rigides,
et/ou dans laquelle les premier et deuxième éléments de soutien sont raccordés aux première et deuxième parois latérales (16) ou à un bâti de la presse à balles.

3. Une presse à balles à chambre variable selon n'importe laquelle des revendications précédentes, dans laquelle les première et deuxième extrémités du rouleau de détection (40) sont raccordées aux premier et deuxième éléments de soutien par l'intermédiaire de paliers rotatifs.

4. Une presse à balles à chambre variable selon n'importe laquelle des revendications précédentes, dans laquelle la courroie (18) est fléchie à mesure qu'elle défile autour du rouleau de détection (40) par un angle de fléchissement θ où θ ≥ 45°, ou θ ≥ 90°, ou θ ≥ 120°, ou θ ≥ 135°.

5. Une presse à balles à chambre variable selon n'importe laquelle des revendications précédentes, dans laquelle le rouleau de détection (40) comprend un rouleau à rotation libre,
et/ou dans laquelle le rouleau de détection (40) est situé dans une partie supérieure de la chambre à balle (14),
et/ou dans laquelle le rouleau de détection (40) est le rouleau le plus supérieur d'une pluralité de rouleaux autour desquels défile la courroie (18).

6. Une presse à balles à chambre variable selon n'importe laquelle des revendications précédentes, la presse à balle incluant une paire de rouleaux mobiles (20b') situés de façon adjacente à la zone de formation de balle, lesquels peuvent se déplacer en réponse à des changements de taille de la balle dans la zone de formation de balle, et un rouleau intermédiaire fixe (23) situé à l'écart de la zone de formation de bale, lequel guide la courroie à mesure qu'elle défile entre les rouleaux mobiles, le rouleau intermédiaire comprenant le rouleau de détection.

7. Une presse à balles à chambre variable selon n'importe laquelle des revendications précédentes, incluant une pluralité de courroies (18) qui définissent une zone de formation de balle au sein de la chambre à balle, les courroies étant agencées côte-à-côte sur la largeur de la chambre à balle, et facultativement la pluralité de courroies incluant une première courroie située de façon adjacente à la première paroi latérale de la chambre à balle et une deuxième courroie située de façon adjacente à la deuxième paroi latérale de la chambre à balle, et le dispositif de commande (50) étant configuré pour déterminer, à partir des signaux de contrainte reçus, une différence dans la tension de courroie des première et deuxième courroies.

8. Une presse à balles à chambre variable selon n'importe laquelle des revendications précédentes, dans laquelle le dispositif de commande (50) est raccordé à un dispositif d'affichage (54) et est configuré pour fournir, par le biais du dispositif d'affichage, une indication qui est basée sur la différence déterminée dans la tension de courroie sur la largeur de la chambre à balle.

9. Une presse à balles à chambre variable selon n'importe laquelle des revendications précédentes, dans laquelle le dispositif de commande (50) est configuré pour commander le fonctionnement de la presse à balles de sorte à réduire la différence déterminée dans la tension de balle sur la largeur de la chambre à balle, et dans laquelle facultativement le dispositif de commande est configuré pour réduire la différence déterminée dans la tension de courroie sur la largeur de la chambre à balle par commande d'une ou de plusieurs fonctions parmi les fonctions de presse à balles suivantes :
• la trajectoire de la presse à balles par rapport à un andain étalé de matériau de balle sur le sol ;
• le fait d'alimenter la chambre à balle en matériau de balle par un dispositif d'alimentation.

10. Une presse à balles à chambre variable selon n'importe quelle revendication précédente, dans laquelle le dispositif de commande (50) inclut une interface opérateur (55) qui permet à un opérateur de sélectionner un ou plusieurs paramètres de fonctionnement du dispositif de commande, lesdits paramètres de fonctionnement incluant un ou plusieurs paramètres parmi :
• une tension de courroie souhaitée ;
• une valeur maximale de la tension de courroie ;
• une relation entre la consommation d'énergie de la presse à balles et la tension de courroie ;
• une différence admissible maximale dans la tension de courroie sur la largeur de la chambre à balle.

11. Un procédé de formation d'une balle dans une presse à balles à chambre variable qui comprend une chambre à balle (14) ayant une largeur définie par des premier et deuxième parois latérales (16), au moins une courroie (18) qui définit une zone de formation de balle au sein de la chambre à balle, au moins un rouleau (40) sur lequel défile la courroie, ledit au moins un rouleau comprenant un rouleau de détection ayant des première et deuxième extrémités soutenues par des premier et deuxième éléments de soutien respectifs ; un tendeur de courroie (25) qui est configuré pour régler la tension de courroie ; des première et deuxième jauges de contrainte (48) montées respectivement sur les premier et deuxième éléments de soutien et configurées pour détecter une contrainte dans les premier et deuxième éléments de soutien, et un dispositif de commande (50) qui est raccordé pour recevoir des signaux de contrainte en provenance des première et deuxième jauges de contrainte, moyennant quoi le dispositif de commande (50) est configuré pour commander le fonctionnement du tendeur de courroie ;
le procédé comprenant :
• le fait de faire tourner et de comprimer le matériau de balle au sein de la zone de formation de bale pour former une balle ; et
• le fait de détecter une contrainte dans les premier et deuxième éléments de soutien ;
• le fait de déterminer par le dispositif de commande (50) à partir des signaux de contrainte reçus une différence dans la tension de courroie sur la largeur de la chambre à balle, et
• le fait de commander, grâce au dispositif de commande (50), le fonctionnement du tendeur de courroie de sorte à réduire la tension de courroie si :
o la différence déterminée dans la tension de courroie sur la largeur de la chambre à balle dépasse une limite prédéterminée, et/ou
o une somme des signaux de contrainte reçus dépasse une limite prédéterminée.

12. Un procédé selon la revendication 11, comprenant en outre le fait d'afficher, par le biais d'un dispositif d'affichage (52), la différence déterminée dans la tension de courroie sur la largeur de la chambre à balle.

13. Un procédé selon n'importe laquelle des revendications 11 à 12, comprenant en outre le fait de commander le fonctionnement de la presse à balles de façon à réduire la différence déterminée dans la tension de courroie sur la largeur de la chambre à balle, et facultativement comprenant en outre le fait de réduire la différence déterminée dans la tension de courroie sur la largeur de la chambre à balle par commande d'une ou de plusieurs fonctions parmi les fonctions de presse à balles suivantes :
• la trajectoire de la presse à balles par rapport à un andain étalé de matériau de balle sur le sol ;
• le fait d'alimenter la chambre à balle en matériau de balle par un dispositif d'alimentation.
